# FASCICULE DE BREVET EUROPEEN

(11) **EP 2 900 487 B1**
(45) Date de publication et mention de la délivrance du brevet: **22.02.2017**
(21) Numéro de dépôt: 13766530.3
(22) Date de dépôt: 25.09.2013
(51) Int. Cl.: B60C 11/03, B60C 11/04

(54) **DISPOSITIF PERFECTIONNÉ ANTI BRUIT DE RÉSONANCE POUR PNEU**
VERBESSERTE RESONANZGERÄUSCH VERMINDERNDE VORRICHTUNG FÜR EINEN REIFEN
IMPROVED DEVICE AGAINST RESONANCE SOUND FOR A TIRE

(30) Priorité: 26.09.2012 FR 1259031
(43) Date de publication de la demande: 05.08.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BOURGEOIS, Frédéric, F-63040 Clermont-Ferrand Cedex 9 (FR); BRUNEAU, François-Xavier, F-63040 Clermont-Ferrand Cedex 9 (FR); FICKINGER, Pascal, F-63040 Clermont-Ferrand Cedex 9 (FR)
(74) Mandataire: Diernaz, Christian
(86) Numéro de dépôt international: PCT/EP2013/069910
(87) Numéro de publication internationale: WO 2014/048952

(56) Documents cités:
- EP-A1- 2 319 711
- JP-A- H08 150 812

## Description

### DOMAINE DE L'INVENTION

La présente invention concerne les bandes de roulement de pneu et plus particulièrement les bandes de roulement comprenant des rainures comportant des dispositifs flexibles pour réduire le bruit généré par la mise en résonance de l'air dans ces rainures lors du roulage.

### ÉTAT DE LA TECHNIQUE

Il est connu que le passage dans le contact d'un pneu en roulage sur une chaussée génère une circulation d'air dans un tuyau formé par une rainure notamment une rainure d'orientation générale circonférentielle et la chaussée elle-même, ce tuyau étant ouvert à ses deux extrémités.

L'air dans ce tuyau forme une colonne d'air en vibration dont la fréquence de résonance dépend de la longueur entre les deux extrémités du tuyau et en conséquence de la longueur de rainure dans le contact avec la chaussée.

Cette résonance de l'air dans les rainures a comme conséquence de générer, dans un véhicule pourvu avec ces pneus, un bruit à l'intérieur du véhicule et un bruit à l'extérieur du véhicule.

Ces bruits intérieur et extérieur correspondent le plus souvent à une fréquence voisine de ou égale à 1 kHz correspondant à une fréquence particulièrement sensible à l'oreille humaine. Afin de réduire un tel bruit de résonance, il est connu de disposer, dans chaque rainure d'orientation circonférentielle ou globalement circonférentielle, une pluralité de membranes ou lames de fermeture relativement peu épaisses en matériau caoutchoutique, chaque membrane ou lame de fermeture occupant toute la section de la rainure ou à tout le moins une grande partie de cette section. Chaque membrane de fermeture peut s'étendre à partir du fond de la rainure ou être fixée à l'une au moins des parois délimitant ladite rainure. Par relativement peu épaisse, on entend que chaque membrane de fermeture est apte à fléchir pour ouvrir la section de la rainure sous un flux de liquide notamment lors d'un roulage par temps de pluie.

Grâce à ces membranes de fermeture, la longueur de la colonne d'air dans chaque rainure circonférentielle est réduite par rapport à la longueur totale de la rainure dans le contact, ce qui conduit à un changement de la fréquence de résonance. Le déplacement de fréquence se fait vers des valeurs de fréquences de résonance moins sensibles à l'oreille humaine.

Bien entendu, pour conserver la fonction de drainage de l'eau, en cas de roulage sur chaussée revêtue d'eau, il est nécessaire que cette membrane puisse fléchir d'une façon appropriée sous l'action de la pression de l'eau et ainsi ouvrir la section de la rainure. Il a été proposé plusieurs solutions de ce type pour réduire la résonance de la colonne d'air en vibration dans les rainures.

Une telle façon de faire est par exemple décrite dans les documents de brevet FR2715891, JP3-276802, JP08-150812, JP4-221207.

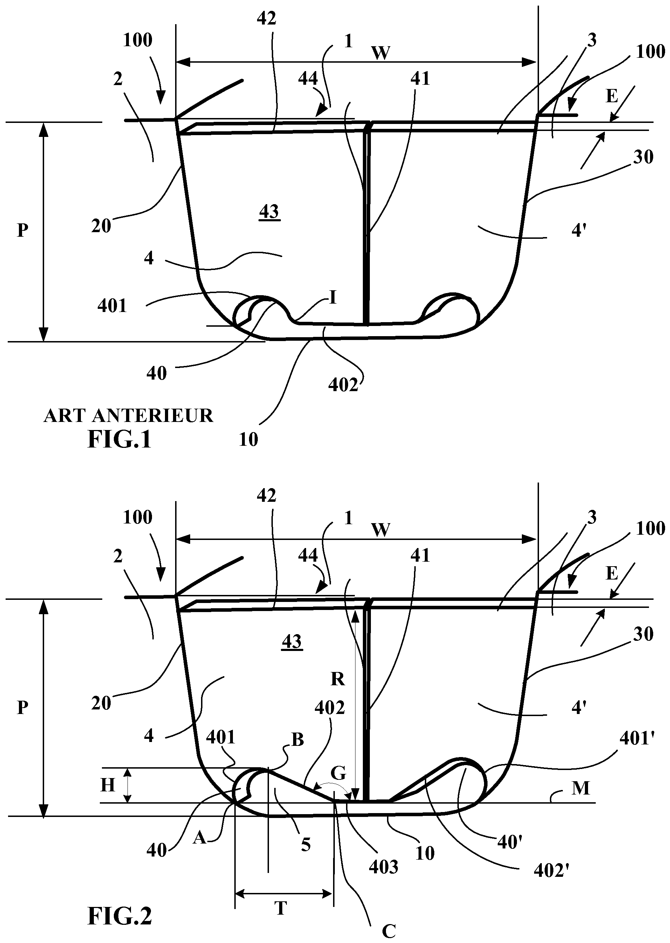

Si ces dispositifs sont efficaces à l'état neuf, il a été constaté que ces dispositifs de fermeture n'étaient plus nécessaires après une usure partielle supérieure à environ 50% de l'épaisseur de la bande de roulement. Dans ce but, il a été proposé, dans le document WO2013072169 non publié à la date de dépôt de la présente demande, une solution visant à permettre la suppression du dispositif de fermeture après une usure prédéterminée. Selon cette proposition, chaque membrane du dispositif est fixée à une paroi latérale délimitant une rainure et il est formé sur la paroi de fond de la membrane une encoche au voisinage de la paroi portant ladite membrane. La figure 1 montre une telle réalisation de l'art antérieur. Cette disposition facilite également l'opération de moulage.

Il a toutefois été constaté avec ce dernier type de membrane qu'il pouvait se produire des incidents lors de l'étape de démoulage : des parties de membrane pouvaient en effet être déchirées, ce qui réduisait d'autant la fermeture de la rainure et l'efficacité du dispositif pour réduire le bruit.

### Définitions :

La surface de roulement d'une bande de roulement correspond à la surface de la bande venant en contact avec un sol lors du roulage d'un pneu pourvu d'une telle bande. La surface de roulement à l'état neuf correspond à la surface de la bande directement en contact avec la surface du moule moulant cette bande.

Une rainure correspond à un espace formé dans une bande de roulement, cet espace étant délimité par des parois de matière, ces parois étant réunies par un fond de rainure distant de la surface de roulement de la bande d'une distance égale à la profondeur de la rainure. Le fond de rainure correspond à la partie de la rainure qui est située radialement au-dessous de l'indicateur d'usure limite à partir duquel la bande de roulement ne satisfait plus aux exigences légales d'utilisation.

Un bloc est un élément en relief formé sur une bande de roulement, cet élément étant délimité par des creux ou rainures et comprenant des parois latérales et une face de contact, cette dernière - destinée à venir en contact avec la chaussée pendant le roulage, faisant partie de la surface de roulement de la bande.

Une nervure est un élément en relief formé sur une bande de roulement, cet élément étant délimité par deux rainures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

### BREF EXPOSÉ DE L'INVENTION

La présente invention vise à obtenir un dispositif de fermeture de rainure dont le moulage et le démoulage sont rendus plus aisés comparativement aux dispositifs connus formés de lames solidaires de l'une des parois délimitant une rainure, la présente invention réduisant très sensiblement les défauts lors du démoulage. La mise en oeuvre de ce dispositif peut intéresser tout type de rainure, que cette rainure soit d'orientation circonférentielle, transversale ou oblique.

À cet effet, l'invention a pour objet une bande de roulement pour pneu, cette bande de roulement ayant une surface de roulement destinée à venir en contact avec une chaussée et comprenant au moins une rainure de largeur W et de profondeur D délimitée par deux parois se faisant face, ces parois étant reliées entre elles par un fond de rainure, au moins une rainure comportant au moins un dispositif flexible pour fermer au moins partiellement cette rainure lors de son passage dans le contact avec une chaussée, chaque dispositif flexible comprenant au moins une lame d'épaisseur appropriée pour permettre sa flexion sous l'effet d'une circulation de liquide, cette au moins une lame étant portée par une paroi délimitant la rainure, chaque lame d'épaisseur E et de largeur L étant limitée par une paroi de fond faisant face au fond de la rainure, une paroi d'extrémité faisant face à l'autre paroi de la rainure et une paroi de contact destinée à venir en contact avec la chaussée et des parois latérales espacées l'une de l'autre d'une distance égale à l'épaisseur E de la lame.

Cette bande de roulement étant telle que la paroi de fond de la lame comprend une première partie s'étendant entre les points de liaison avec la paroi portant la lame, une deuxième partie prolongeant la première partie, cette deuxième partie se prolongeant par une troisième partie jusqu'à la partie d'extrémité de la lame, la première partie et la deuxième partie étant décalées radialement vers l'extérieur par rapport à un plan reliant les points de liaison avec la paroi portant la lame et les points de liaison de la deuxième partie à la troisième partie pour former une encoche de hauteur maximale H dans la paroi de fond de la lame.

Cette bande de roulement est caractérisée en ce que l'angle entre la deuxième partie et la troisième partie est supérieur à 110 degrés et inférieur à 180 degrés.

Avantageusement, l'angle entre la deuxième partie et la troisième partie est au moins égal à 130 degrés et au plus égal à 160 degrés.

Si on considère, dans un plan de coupe transversal, la droite - dite droite de référence, reliant le point de liaison entre le profil de la première partie et le profil de la deuxième partie de la paroi de fond dans un même plan de coupe et le début du profil de la troisième partie dans le même plan de coupe, l'invention préconise que le profil de la deuxième partie reste proche de cette droite de référence, voire se confonde avec cette droite.

La hauteur H de l'encoche est mesurée dans la direction de la profondeur de la rainure entre cette droite de référence et les points de la première partie les plus proches de la surface de roulement à l'état neuf. La largeur T de l'encoche est mesurée dans la direction de la largeur de la rainure.

Dans le cadre de l'invention, l'expression "paroi portant la lame" doit ici s'interpréter comme désignant l'une des parois latérales délimitant la rainure.

Grâce à l'invention, il est possible d'éviter des concentrations d'efforts sur le raccordement entre les parties formant encoche et le reste de la paroi de fond des lames.

Avantageusement, les première partie et deuxième partie de la paroi de fond s'étendent sur une largeur T au moins égale à 30 % de la largeur totale L de la lame mesurée sur la partie de fond de ladite lame.

Avantageusement, la bande de roulement est telle que, à l'état neuf, la profondeur H de l'encoche formée par les première et deuxième parties de la paroi de fond est inférieure - à l'état neuf, à 15 % de la distance maximale R des points de la troisième partie de la paroi de fond mesurée par rapport à la même surface de roulement à l'état neuf.

Avantageusement, la première partie de la paroi de fond est formée d'un arc de cercle ayant un petit rayon de courbure, c'est-à-dire un rayon au moins égal à 5% de la largeur W de la rainure et au plus 30 % de la même largeur W.

Selon une variante avantageuse, la deuxième partie prolongeant la première partie de la paroi de fond est plane ou quasiment plane, c'est-à-dire ayant des courbures très faibles. Par courbure très faible, on entend ici que le rayon de courbure est au moins égal à 100 mm.

Selon une autre variante intéressante, la distance séparant la troisième partie de la paroi de fond du fond de la rainure est au plus égale à 10 % de la profondeur de la rainure.

Avantageusement, le profil de la troisième partie de la paroi de fond de la lame est parallèle au profil du fond de rainure.

Selon une autre variante avantageuse, le profil de la troisième partie peut être de longueur réduite de façon que la deuxième partie se raccorde directement à la partie d'extrémité de la lame. Dans un tel cas, la deuxième partie se raccorde avec la paroi d'extrémité de la lame en faisant un angle qui est au moins égal à 20 degrés et au plus égal à 70 degrés.

L'invention concerne, outre les variantes de bandes de roulement telles qu'énoncées, les pneus pourvus de telles bandes de roulement.

Dans une variante avantageuse, il est formé une encoche entre chaque lame et la paroi portant ladite lame dans la partie de liaison située à proximité de la surface de roulement à l'état neuf. Cette encoche augmente la souplesse de flexion de chaque lame. Cette encoche peut prendre la forme d'une incision de faible largeur voire de largeur nulle.

Il est en outre possible de prévoir un logement transversal sur le fond de la rainure de manière à permettre à la paroi de fond d'une lame de venir se loger au moins partiellement afin d'augmenter le taux de fermeture de la section de ladite rainure par ladite lame.

Préférentiellement, la profondeur de ce logement est au moins égale à la hauteur de l'encoche afin que la lame ferme le plus possible la rainure dans laquelle elle est formée.

Un même logement peut également être prévu sur la paroi sur laquelle une lame selon l'invention est liée. Une semblable disposition s'applique au cas d'une lame unique fermant en totalité la section d'une rainure ; dans ce cas, il est avantageux de prévoir une rainure formant logement pour la partie d'extrémité de chaque lame.

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une variante d'un dispositif selon l'art antérieur, ce dispositif comprenant deux lames portées par les parois latérales d'une rainure ;
La figure 2 montre une première variante d'un dispositif comprenant deux lames selon l'invention ;
La figure 3 montre deux variantes de lames d'un dispositif qui ne correspond pas à l'invention pour lesquelles la troisième partie est réduite en largeur à une ligne sur la face d'extrémité de la lame ;
La figure 4 montre une vue d'une lame unique obstruant en quasi-totalité une rainure d'une bande de roulement selon l'invention, cette lame unique étant partiellement encastrée dans un logement sur les parois latérales et sur le fond de la rainure.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

La figure 1 montre, en coupe, une vue partielle d'une bande de roulement selon l'art antérieur, cette bande équipant un pneu de dimension **225 / 55 R 17.** On a représenté sur cette figure une rainure 1 limitée par deux éléments de relief 2, 3 de la bande, cette rainure 1 s'étendant sensiblement dans une direction circonférentielle du pneu sur lequel est montée ladite bande. Cette rainure 1, de largeur W - mesurée sur la surface de roulement à l'état neuf, égale à 13 mm et de profondeur P égale à 7.5 mm, est limitée par une première paroi 20 et une seconde paroi 30 se faisant face et un fond de rainure 10 reliant entre elles ces deux parois. La bande de roulement comprend une surface de roulement 100 destinée à être en contact avec une chaussée au cours du roulage. Dans ce qui suit, la paroi de fond 10 de la rainure 1 correspond à la partie de la rainure qui est conservée après usure de la bande jusqu'à la limite légale fixée par les règlements nationaux.

Cette rainure 1 comprend un dispositif anti bruit formé par une pluralité de lames flexibles moulés dans ladite rainure pour former une pluralité d'obstacles. Chaque dispositif comprend deux lames 4, 4' occupant chacune la moitié de la section de la rainure 1, ces lames 4, 4' se trouvant dans le prolongement l'une de l'autre. Chaque lame 4, 4' fait saillie sur une paroi 20, 30 respectivement.

Sur la première paroi 20 est moulée une première lame 4 d'épaisseur faible (c'est-à-dire dans le cas présent d'épaisseur égale à 0.6 mm) afin de pouvoir aisément fléchir autour d'un axe suivant sensiblement la liaison de cette première lame 4 avec la paroi 20 sur laquelle elle est liée dans le but de laisser s'écouler l'eau dans la rainure 1 lors d'un roulage sur chaussée revêtue d'eau tout en faisant obstacle à la circulation de l'air en roulage sur chaussée sèche.

Cette première lame 4 est limitée par une paroi de fond 40 faisant face au fond 10 de la rainure, une paroi d'extrémité 41 faisant face à la seconde paroi 30 de la rainure 1 et une paroi de contact 42 destinée à venir en contact avec la chaussée et des parois latérales 43, 44 espacées d'une distance égale à l'épaisseur de la lame.

La paroi de fond 40 de la première lame 4 comprend une première partie dite partie de raccordement 401 avec la paroi 20 portant cette lame, cette partie de raccordement 401 ayant, dans un plan de coupe transversal à la direction principale de la rainure, un profil en demi-cercle, dont le centre de courbure est situé du côté du fond 10 de la rainure et dont le rayon de courbure est dans le cas présent égal à 1 mm.

Par "localisé du côté du fond 10 de la rainure", il faut comprendre que la partie de raccordement 401 forme une sorte d'encoche dans la lame, la concavité de cette encoche étant tournée vers le fond 10 de la rainure.

La partie de raccordement 401 est prolongée par une partie additionnelle 402 substantiellement plane jusqu'à la partie d'extrémité 41 de la lame 4.

La jonction entre la partie de raccordement 401 et la partie additionnelle 402 se fait - sur la vue en coupe de la figure 1, en un point d'inflexion I.

En combinaison avec cette première lame 4, il est formé une seconde lame 4' de même géométrie, cette seconde lame étant liée à la seconde paroi 30 située en vis-à-vis de la première paroi 4 afin d'obstruer en quasi-totalité la section transversale de la rainure. Dans le cas présenté, la première lame 4 et la seconde lame 4' sont formées de manière à avoir leurs parties d'extrémité respectives en contact l'une sur l'autre après le moulage de la bande.

Avec la figure 2, il est montré une variante d'un dispositif réducteur de bruit, ce dispositif comprenant deux lames 4 et 4' selon l'invention. Ces lames 4 et 4' sont globalement semblables à celles montrées avec la figure 1 à la différence que la partie de fond de chaque lame est construite selon l'invention. La dimension du pneu est identique à celle de l'exemple de l'art antérieur montré avec la figure 1 et les principales dimensions sont ici reprises, notamment les épaisseurs des lames.

La paroi de fond 40 de la lame 4 comprend une première partie 401 s'étendant entre les points de liaison avec la paroi portant la lame, une deuxième partie 402 prolongeant la première partie, cette deuxième partie se prolongeant par une troisième partie 403 jusqu'à la partie d'extrémité 41 de la lame, la première partie et la deuxième partie étant décalées radialement vers l'extérieur par rapport à un plan, repéré par sa trace M sur le plan de la figure, reliant les points de liaison A avec la paroi 20 portant la lame 4 et les points de liaison B de la deuxième partie 402 à la troisième partie 403 pour former dans la paroi de fond de la lame 4 une encoche 5 de hauteur maximale H et de largeur T.

La première partie 401 a la forme d'un arc de cercle et est prolongée par une deuxième partie plane se raccordant de façon tangentielle à la première partie. Cette deuxième partie 402 se prolonge par une troisième partie 403 plane parallèle au fond 10 de la rainure 1. La troisième partie 403 est proche du fond de la rainure, c'est-à-dire à moins de 0.5 mm. Dans le cas présent la profondeur P de la rainure est égale à 7.5 mm et la distance R séparant les points de la troisième partie 403 de la paroi supérieure 42 de la lame 4 est égale à 6.5 mm, cette paroi supérieure 42 étant en léger décalage vers extérieure

En outre, l'angle G mesuré entre la deuxième partie 402 et la troisième partie 403 est, dans le cas présent, égal à 145 degrés.

La première partie 401 et la deuxième partie 402 forment une encoche 5 sur la paroi de fond 40 de la lame 4. Cette encoche 5 a une profondeur H ici égale à 0.5 mm et une largeur T mesurée entre le point A de liaison avec la paroi de la rainure et le point C de raccord avec la troisième partie, égale à 2 mm.

L'autre lame flexible 4' est construite pour avoir une géométrie identique à celle de la lame 4 avec laquelle elle coopère afin de fermer la rainure (les parois d'extrémité 41 et 41' sont en contact dans la position de fermeture).

Grâce à cette disposition, on rend plus aisé le moulage et le démoulage du pneu pourvu de lames obstruant les rainures et on réduit le risque d'endommagement dans la région du point C.

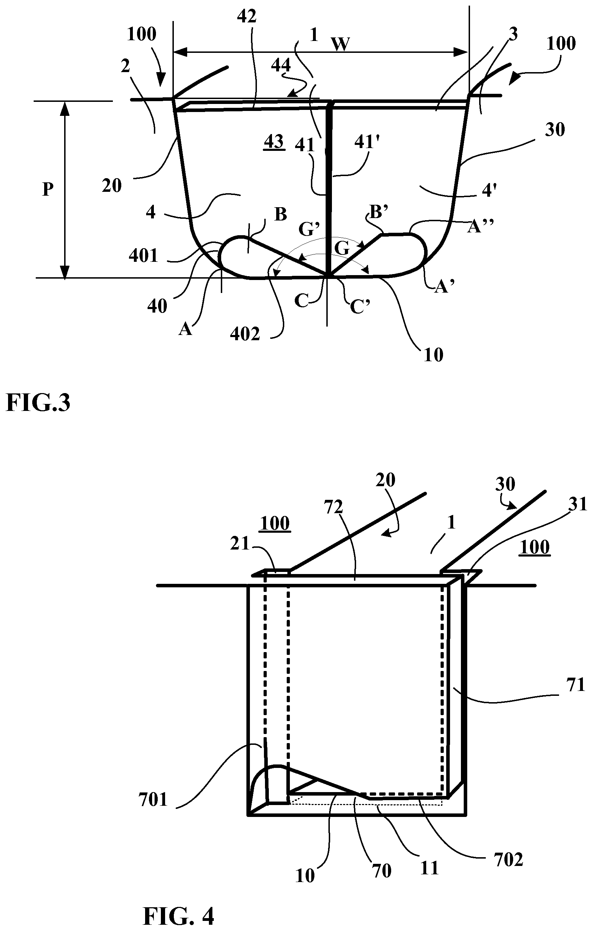

La figure 3 montre deux variantes de lames d'un dispositif selon l'invention pour lesquelles chaque troisième partie 403, 403' est réduite, en largeur, à une ligne sur la paroi d'extrémité de chaque lame. Sur cette figure 3, on distingue une rainure 1 vue en coupe transversale, cette rainure comprenant un dispositif de réduction des bruits de résonance en roulage. Ce dispositif comprend une première lame 4 et une seconde lame 4' construite toutes les deux sur le principe des lames montrées avec la figure 2.

La rainure 1 est délimitée par les faces latérales 20, 30 d'éléments de relief 2, 3.

Une première lame 4, portée par une paroi latérale 20 d'un élément 2, comprend sur sa paroi de fond 40 une première partie 401 s'étendant entre les points de liaison A avec la paroi 20 portant la lame 4, une deuxième partie 402 prolongeant la première partie 401, cette deuxième partie 402 se prolongeant jusqu'à la partie d'extrémité 41 de la lame. Dans le cas présent, la troisième partie est réduite, dans le plan de la figure à un point C. Tous les points des première et deuxième parties sont disposés pour former une encoche 5 s'étendant sur toute la largeur de la lame 4.

La deuxième lame 4' en vis-à-vis de la lame 4 est portée par l'autre paroi 3 montre une variante de géométrie de l'encoche 5' selon laquelle la première partie est formée d'un arc de cercle entre un point A' sur la paroi 30 et un point A", cet arc de cercle se prolongeant par un segment de droite entre ce point A" et un point B', ce segment étant parallèle au fond 10 de la rainure 1. Cette première partie est prolongée par une partie plane (rectiligne dans le plan de la figure) jusqu'à un point C' positionné sur la paroi d'extrémité 41' de la lame 4'.

Pour ces deux variantes les angles G et G' sont mesurés par rapport à une direction parallèle au fond de la rainure dans le plan de la figure 3. Ces angles G et G' sont respectivement égaux à 155 degrés et 130 degrés.

La figure 4 montre une vue d'une lame unique 7 obstruant en quasi-totalité une rainure 1 d'une bande de roulement selon l'invention, cette lame unique 7 étant partiellement encastrée dans un logement 21 formé sur une paroi latérale 20. Cette lame 7 comprend une paroi d'extrémité 71 située à l'opposé de la partie liée à la paroi latérale 20, une paroi de fond 70 et une paroi de contact 72 destinée à venir en contact avec la route lors d'un roulage. Cette paroi de contact 72 est à l'état neuf dans le prolongement de la surface de roulement 100 de la bande.

Sur la paroi de fond 70 est formée une encoche 75 délimitée par une première partie 701 reliée à la paroi 20 et une deuxième partie 702 dans le prolongement de ladite première partie. Cette deuxième partie 702 se raccordant à une troisième partie 703 qui est parallèle au fond 10 de la rainure. L'angle entre la deuxième partie et la troisième partie est supérieur à 110 degrés.

En outre, il est prévu dans le prolongement du premier logement 21, un deuxième logement 11 formé sur le fond 10 de la rainure. Les profondeurs de ces premier et deuxième logements sont appropriées pour que l'ensemble de l'encoche 57 soit masquée par la matière afin que la lame 7 obstrue en totalité la section de la rainure 1.

Enfin un troisième logement 31 est prévu dans le prolongement du deuxième logement sur la paroi 30 délimitant la rainure 1 avec la paroi 20.

L'invention ayant été décrite de manière générale et au moyen de quelques variantes, il doit être compris que cette invention n'est pas limitée à ces seules variantes décrites et représentées. Les diverses variantes décrites ici peuvent être combinées entre elles par la personne du métier en fonction de l'objectif toujours dans le cadre des revendications ci-jointes.

Il est également possible de former un dispositif de fermeture comprenant deux lames selon l'invention, ces lames étant décalées l'une par rapport à l'autre dans la direction principale de la rainure dans laquelle ledit dispositif de fermeture est formé.

## Revendications

1. Bande de roulement pour pneu, cette bande de roulement ayant une surface de roulement (100) destinée à venir en contact avec une chaussée et comprenant au moins une rainure (1) de largeur W et de profondeur P délimitée par deux parois (20, 30) se faisant face, ces parois étant reliées entre elles par un fond de rainure (10), au moins une rainure (1) comportant au moins un dispositif flexible pour fermer au moins partiellement cette rainure lors de son passage dans le contact avec une chaussée, chaque dispositif flexible comprenant au moins une lame (4, 4') d'épaisseur appropriée pour permettre sa flexion sous l'effet d'une circulation de liquide, cette au moins une lame (4, 4') étant portée par une paroi délimitant la rainure (1), chaque lame (4) d'épaisseur E étant limitée par une paroi de fond (40) faisant face au fond de la rainure (10), une paroi d'extrémité (41) faisant face à l'autre paroi de la rainure et une paroi de contact (42) destinée à venir en contact avec la chaussée et des parois latérales (43, 44) espacées l'une de l'autre d'une distance égale à l'épaisseur E de la lame,
cette bande de roulement étant telle que la paroi de fond (40) de la lame (4) comprend une première partie (401) s'étendant entre les points de liaison avec la paroi portant la lame, une deuxième partie (402) prolongeant la première partie, cette deuxième partie se prolongeant par une troisième partie (403) jusqu'à la partie d'extrémité (41) de la lame, la première partie et la deuxième partie étant décalées radialement vers l'extérieur par rapport à un plan reliant les points de liaison avec la paroi portant la lame et les points de liaison de la deuxième partie à la troisième partie pour former une encoche de hauteur maximale H dans la paroi de fond de la lame, où l'angle entre la deuxième partie (402) et la troisième partie (403) est supérieur à 110 degrés et inférieur à 180 degrés.

2. Bande de roulement selon la revendication 1 **caractérisée en ce que** l'angle entre la deuxième partie (402) et la troisième partie (403) est au moins égal à 130 degrés et au plus égal à 160 degrés.

3. Bande de roulement selon la revendication 1 ou la revendication 2 **caractérisée en ce que** la première partie (401) et la deuxième partie (402) de la paroi de fond (40) s'étendent sur une largeur T au moins égale à 30 % de la largeur totale L de la lame (4) mesurée sur la paroi de fond (40) de ladite lame.

4. Bande de roulement selon l'une quelconque des revendications 1 à 3 **caractérisée en ce que** la profondeur H de l'encoche (5) formée par les première et deuxième parties de la paroi de fond est - à l'état neuf, inférieure d'au moins 15 % de la distance maximale R des points de la troisième partie (403) de la paroi de fond mesurée par rapport à la surface de roulement (100) à l'état neuf.

5. Bande de roulement selon l'une quelconque des revendications 1 à 4 **caractérisée en ce que** la première partie (401) de la paroi de fond est formée d'un arc de cercle ayant un petit rayon de courbure, c'est-à-dire un rayon au moins égal à 5% de la largeur W de la rainure (1) et au plus 30 % de la même largeur W.

6. Bande de roulement selon l'une des revendications 1 à 5 **caractérisée en ce que** la deuxième partie (402) prolongeant la première partie (401) de la paroi de fond est plane ou quasiment plane, c'est-à-dire ayant des courbures très faibles.

7. Bande de roulement selon l'une des revendications 1 à 6 **caractérisée en ce que** la distance séparant la troisième partie (403) de la paroi de fond du fond (10) de la rainure est au plus égale à 10 % de la profondeur P de la rainure (1).

8. Bande de roulement selon l'une des revendications 1 à 7 **caractérisée en ce qu'**un logement (11) est formé transversalement sur le fond (10) de la rainure de manière à permettre à la paroi de fond (70) d'une lame (7) de venir se loger au moins partiellement afin d'augmenter le taux de fermeture de la section de ladite rainure par ladite lame.

9. Pneu pour véhicule de tourisme pourvu d'une bande de roulement selon l'une des revendications 1 à 8.

## Patentansprüche

1. Laufstreifen für einen Luftreifen, wobei dieser Laufstreifen eine Lauffläche (100) hat, die dazu bestimmt ist, mit einer Straße in Kontakt zu kommen und mindestens eine Rille (1) einer Breite W und einer Tiefe P enthält, die von zwei einander gegenüberliegenden Wänden (20, 30) begrenzt wird, wobei diese Wände durch einen Rillenboden (10) miteinander verbunden sind, wobei mindestens eine Rille (1) mindestens eine elastische Vorrichtung aufweist, um diese Rille bei ihrem Übergang in den Kontakt mit der Straße zumindest teilweise zu schließen, wobei jede elastische Vorrichtung mindestens eine Lamelle (4, 4') geeigneter Dicke enthält, um ihre Biegung unter der Wirkung einer Flüssigkeitsströmung zu erlauben, wobei diese mindestens eine Lamelle (4, 4') von einer die Rille (1) begrenzenden Wand getragen wird, wobei jede Lamelle (4) einer Dicke E von einer Bodenwand (40), die dem Boden der Rille (10) gegenüberliegt, einer Endwand (41), die der anderen Wand der Rille gegenüberliegt, und einer Kontaktwand (42), die dazu bestimmt ist, mit der Straße in Kontakt zu kommen, und von Seitenwänden (43, 44) begrenzt wird, die zueinander einen Abstand gleich der Dicke E der Lamelle haben,
wobei dieser Laufstreifen derart ist, dass die Bodenwand (40) der Lamelle (4) einen ersten Teil (401) enthält, der sich zwischen den Verbindungspunkten mit der die Lamelle tragenden Wand erstreckt, wobei ein zweiter Teil (402) den ersten Teil verlängert, wobei dieser zweite Teil sich durch einen dritten Teil (403) bis zum Endteil (41) der Lamelle verlängert, wobei der erste Teil und der zweite Teil bezüglich einer Ebene radial nach außen versetzt sind, die die Verbindungspunkte mit der die Lamelle tragenden Wand und die Verbindungspunkte des zweiten Teils mit dem dritten Teil verbindet, um eine Kerbe maximaler Höhe H in der Bodenwand der Lamelle zu formen, wobei der Winkel zwischen dem zweiten Teil (402) und dem dritten Teil (403) größer als 110 Grad und kleiner als 180 Grad ist.

2. Laufstreifen nach Anspruch 1, **dadurch gekennzeichnet, dass** der Winkel zwischen dem zweiten Teil (402) und dem dritten Teil (403) mindestens gleich 130 Grad und höchstens gleich 160 Grad ist.

3. Laufstreifen nach Anspruch 1 oder Anspruch 2, **dadurch gekennzeichnet, dass** der erste Teil (401) und der zweite Teil (402) der Bodenwand (40) sich über eine Breite T mindestens gleich 30% der Gesamtbreite L der Lamelle (4), gemessen über die Bodenwand (40) der Lamelle, erstrecken.

4. Laufstreifen nach einem der Ansprüche 1 bis 3, **dadurch gekennzeichnet, dass** die Tiefe H der von den ersten und zweiten Teilen der Bodenwand geformten Kerbe (5) im Neuzustand geringer ist um mindestens 15% des maximalen Abstands R der Punkte des dritten Teils (403) der Bodenwand, gemessen bezüglich der Lauffläche (100) im Neuzustand.

5. Laufstreifen nach einem der Ansprüche 1 bis 4, **dadurch gekennzeichnet, dass** der erste Teil (401) der Bodenwand von einem Kreisbogen geformt wird, der einen kleinen Krümmungsradius hat, d.h. einen Radius mindestens gleich 5% der Breite W der Rille (1) und höchstens 30% der gleichen Breite W.

6. Laufstreifen nach einem der Ansprüche 1 bis 5, **dadurch gekennzeichnet, dass** der den ersten Teil (401) der Bodenwand verlängernde zweite Teil (402) eben oder praktisch eben ist, d.h. sehr geringe Krümmungen hat.

7. Laufstreifen nach einem der Ansprüche 1 bis 6, **dadurch gekennzeichnet, dass** der den dritten Teil (403) der Bodenwand vom Boden (10) der Rille trennende Abstand höchstens gleich 10% der Tiefe P der Rille (1) ist.

8. Laufstreifen nach einem der Ansprüche 1 bis 7, **dadurch gekennzeichnet, dass** eine Aufnahme (11) quer auf dem Boden (10) der Rille geformt wird, um es der Bodenwand (70) einer Lamelle (7) zu ermöglichen, sich zumindest teilweise einzufügen, um den Schließgrad des Querschnitts der Rille durch die Lamelle zu erhöhen.

9. Reifen für ein Personenfahrzeug, der mit einem Laufstreifen nach einem der Ansprüche 1 bis 8 versehen ist.

## Claims

1. Tyre tread, this tread having a tread surface (100) intended to come into contact with a roadway and comprising at least one groove (1) of width W and depth P which is delimited by two walls (20, 30) facing one another, these walls being joined together by a groove bottom (10), at least one groove (1) comprising at least one flexible device for at least partially closing this groove as it enters the contact patch in which the tyre is in contact with a roadway, each flexible device comprising at least one blade (4, 4') of a thickness suited to allowing it to flex under the effect of a circulation of liquid, this at least one blade (4, 4') being borne by a wall delimiting the groove (1), each blade (4) of thickness E being bounded by a bottom wall (40) facing the bottom of the groove (10), an end wall (41) facing the other wall of the groove and a contact wall (42) intended to come into contact with the roadway and lateral walls (43, 44) spaced apart from one another by a distance equal to the thickness E of the blade,
this tread being such that the bottom wall (40) of the blade (4) comprises a first part (401) extending between the points of connection with the wall bearing the blade, a second part (402) extending the first part, this second part being extended by a third part (403) as far as the end part (41) of the blade, the first part and the second part being offset towards the outside with respect to a plane connecting the points of connection with the wall bearing the blade and the points of connection of the second part to the third part in order to form a notch of maximum height H in the bottom wall of the blade, where the angle between the second part (402) and the third part (403) is greater than 110 degrees and less than 180 degrees.

2. Tread according to Claim 1, **characterized in that** the angle between the second part (402) and the third part (403) is at least equal to 130 degrees and at most equal to 160 degrees.

3. Tread according to Claim 1 or Claim 2, **characterized in that** the first part (401) and the second part (402) of the bottom wall (40) extend over a width T at least equal to 30% of the total width L of the blade (4) measured on the bottom wall (40) of the said blade.

4. Tread according to any one of Claims 1 to 3, **characterized in that** the depth H of the notch (5) formed by the first and second parts of the bottom wall is - in the new state - less by at least 15% of the maximum distance R of the points of the third part (403) of the bottom wall as measured with respect to the tread surface (100) in the new state.

5. Tread according to any one of Claims 1 to 4, **characterized in that** the first part (401) of the bottom wall is formed of a circular arc having a small radius of curvature, namely a radius at least equal to 5% of the width W of the groove (1) and at most 30% of same width W.

6. Tread according to one of Claims 1 to 5, **characterized in that** the second part (402) extending the first part (401) of the bottom wall is planar or near-planar, i.e. has curvatures that are very slight.

7. Tread according to one of Claims 1 to 6, **characterized in that** the distance separating the third part (403) of the bottom wall from the bottom (10) of the groove is at most equal to 10% of the depth P of the groove (1).

8. Tread according to one of Claims 1 to 7, **characterized in that** a housing (11) is formed transversely on the bottom (10) of the groove so as to allow the bottom wall (70) of a blade (7) to become at least partially lodged therein in order to increase the extent to which the cross section of the said groove is closed by the said blade.

9. Passenger vehicle tyre provided with a tread according to one of Claims 1 to 8.
